# EUROPEAN PATENT SPECIFICATION

(11) **EP 2 106 727 B1**
(45) Date of publication and mention of the grant of the patent: **19.01.2011**
(21) Application number: 09156538.2
(22) Date of filing: 27.03.2009
(51) Int. Cl.: A47J 31/36

(54) **Automatic dispensing device of orientable capsules for hot beverages**
Automatische Spendervorrichtung für ausrichtbare Kapseln für heiße Getränke
Dispositif de distribution automatique de capsules orientables pour boissons chaudes

(30) Priority: 02.04.2008 IT MI20080563
(43) Date of publication of application: 07.10.2009
(73) Proprietor: Componenti Vending S.p.A., 20122 Milano (IT)
(72) Inventor: Blanchino, Francesco, 22076 MOZZATE (CO) (IT); Manunta, Mauro, 21049 TRADATE (VA) (IT)
(74) Representative: Mittler, Enrico

(56) References cited:
- EP-A- 0 199 953
- EP-A- 1 310 199
- EP-A- 1 797 800
- WO-A-2004/045350

## Description

The present invention relates to an automatic dispensing vending device of orientable capsules for hot beverages.

These beverages are prepared in place and automatically from capsules containing, for example, a freeze-dried version of the beverage type to be achieved, to which hot water is added. The prepared beverages range from bar products, such as coffee or tea, to broth.

On the market and in the known art, there are different types of devices for supplying capsules to machines for the automatic production of hot beverages. Some require a capsule-by-capsule manual insertion into the loading drawer of the machine for preparing the beverage, others have a storage compartment where the capsules are held in open order, and a quite complicated device is then expected to move the capsules and suitably orient them for being automatically supplied. The document WO-2004/045350 disclosed a capsule feeding apparatus for beverage vending mechine.

The complication of these mechanisms is unfavorable to a simplified maintenance of the device.

Therefore, the need for a device which allows to carry out an automated capsule distribution with a simplified maintenance arises.

Therefore, it is the object of the present invention to achieve a device which allows to carry out an automatic capsule distribution with a highly simple structure.

In accordance with the invention, such an object is achieved by an automatic dispensing machine device as disclosed in claim 1.

These and other features of the present invention will be more apparent from the following detailed description of a practical embodiment thereof shown by way of non-limiting example in the accompanying drawings, in which:
Figure 1 shows a vertical section view of a first embodiment of the device according to the invention;
Figure 2 shows an axonometric view of the device in Figure 1;

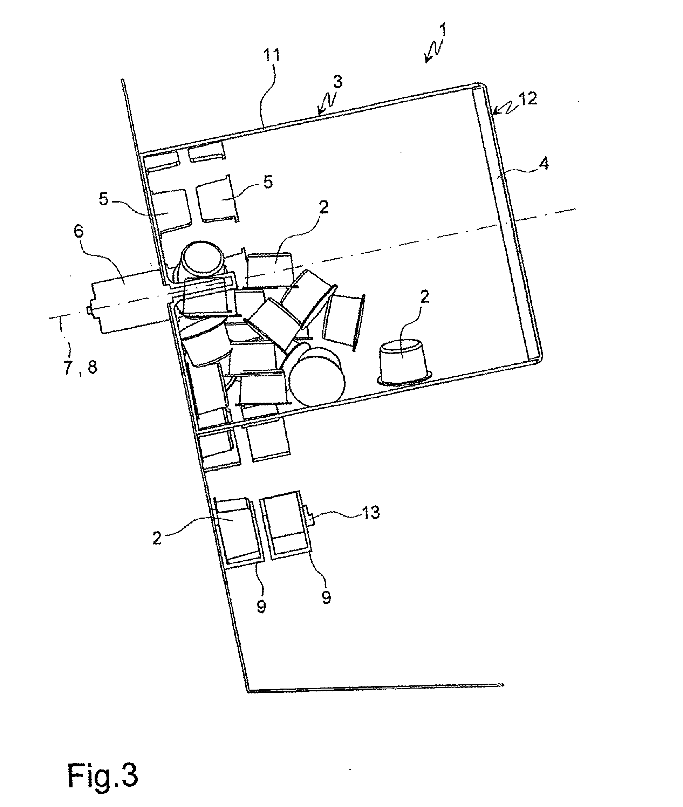

Figure 3 shows a vertical section view of a second embodiment of the device according to the invention;

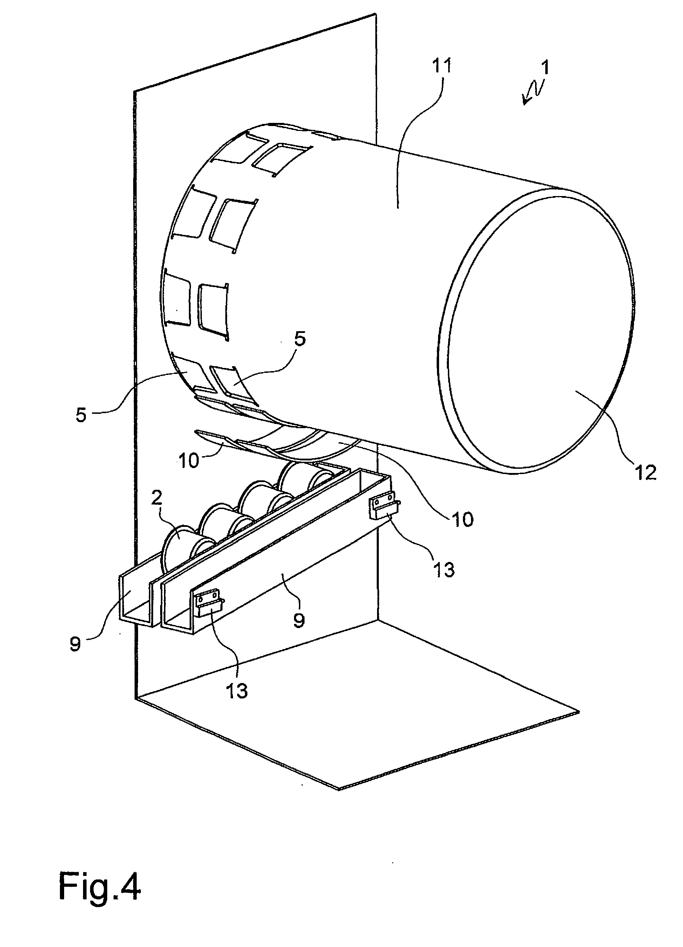

Figure 4 shows an axonometric view of the device in Figure 1.

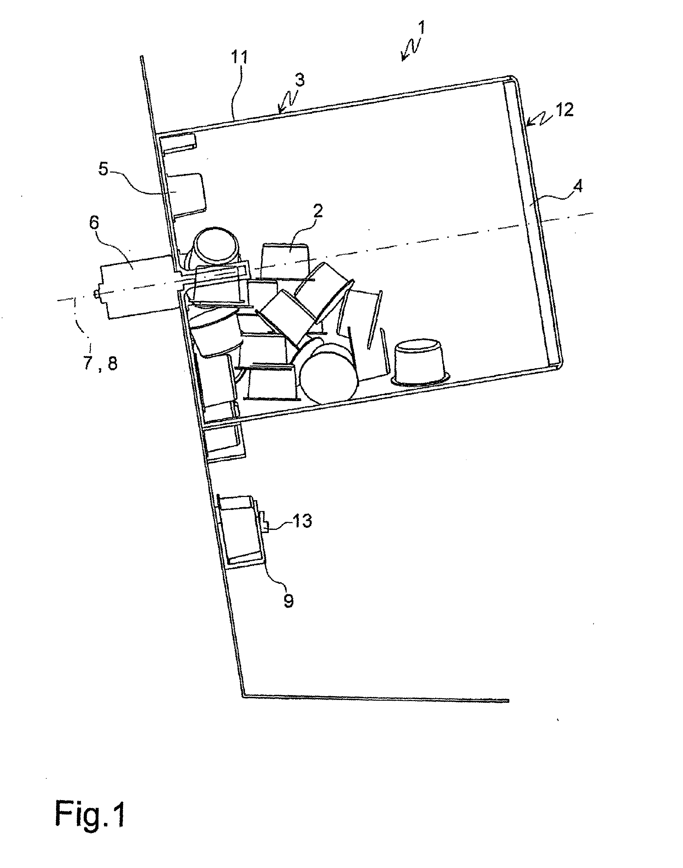

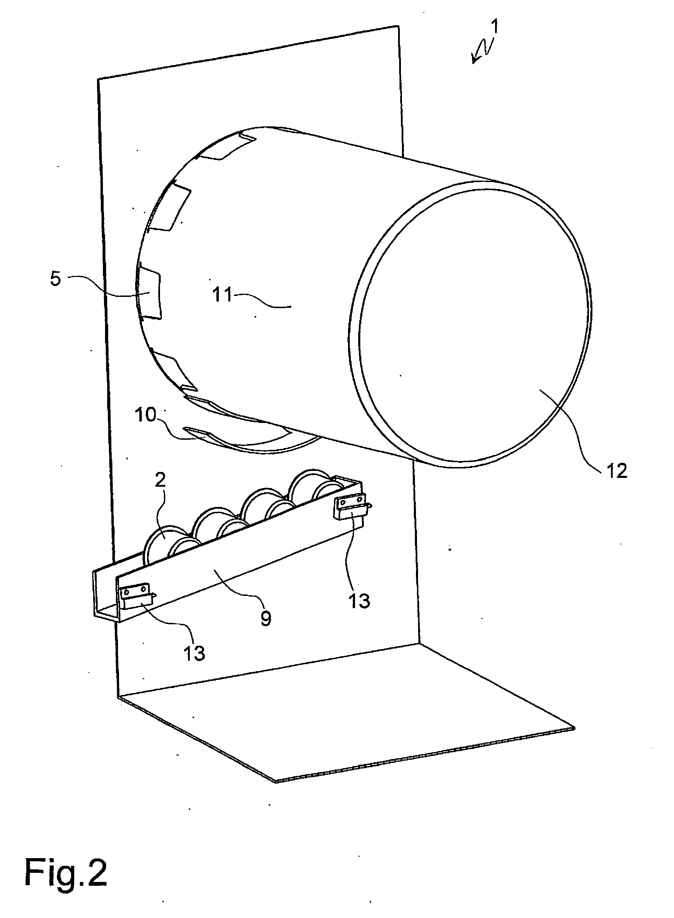

With reference to the enclosed drawings, specifically to Figures 1 and 2, there is shown an automatic dispensing device 1 of orientable capsules 2 for preparing hot beverages, comprising at least one storage compartment 3 adapted to accommodate the capsules 2 in open order. The storage compartment 3 is provided with at least one inlet 4 for capsules 2 and at least one plurality of apertures 5 adapted to the oriented exit of the capsules 2, and means 5 for rotating the storage compartment 3 about a rotation axis 7 in order to facilitate the oriented exit of the capsules 2 are associated therewith. The storage compartment 3 has an exemplary cylindrical shape (alternatively it could also be prismatic) with a main inclined symmetry axis 8. The storage compartment 3 is moved by rotation means 6 associated therewith, e.g. an electric motor. Every plurality of apertures 5 is symmetrically placed and preferably circumferentially distributed about the symmetry axis 8 of the storage compartment 3. The apertures 5 reproduce the volume shape of the capsule 2 in the preferential exit direction.

The movement of the storage compartment 3 may occur by rotating the same such that the main symmetry axis 8 of the storage compartment 3 coincides with the rotation axis 7 imposed by the motor, or such that there is not coincidence between the two axes.

By rotating the storage compartment 3, the capsules are moved and those which are oriented as the apertures 5 exit therefrom and fall on a collecting chute 9 associated with every plurality of apertures 5.

Shutting means 10 for reversibly shutting the plurality of apertures 5, which operate when the respective collecting chute 9 is loaded, and sensors 13 for signaling the reached preset minimum amount of capsules 2 in the chute 9 are advantageously provided.

The inlet 4 for supplying the capsules may be placed at the side part 1 or top part 12 of the storage compartment 3.

The storage compartment 3 may advantageously be provided with more than one plurality of outlet apertures 5, in particular with an opposite orientation, for dispensing differently oriented capsules 2 to be used in different machines. Every plurality of apertures 5 is associated with a respective collecting chute 9, sensors 13 for signaling the reached minimum amount, and means 10 for shutting apertures 5.

## Claims

1. An automatic dispensing device (1) of orientable capsules (2) for preparing hot beverages, comprising at least one storage compartment (3) adapted to accommodate the capsules (2) in a disordered manner, the storage compartment (3) being provided with at least one inlet (4) for capsules (2) and at least a first plurality of apertures (5) adapted to allow the capsules (2) to exit the storage compartment in a oriented manner, **characterized in that** it comprises means (6) for rotating the storage compartment (3) about a rotation axis (7) to facilitate the oriented exit of capsules (2).

2. A device (1) according to claim 1, **characterized in that** the apertures (5) reproduce the volume shape of capsule (2) in the exit direction.

3. A device (1) according to claim 1 or 2, **characterized in that** the storage compartment (3) has a cylindrical or prismatic shape with a main symmetry axis (8).

4. A device (1) according to claim 3, **characterized in that** said symmetry axis (8) is inclined.

5. A device (1) according to claim 3 or 4, **characterized in that** symmetry axis (8) and rotation axis (7) coincide.

6. A device (1) according to claim 3 or 4, **characterized in that** symmetry axis (8) and rotation axis (7) do not coincide.

7. A device (1) according to any one of the claims 3 to 6, **characterized in that** every plurality of apertures (5) is symmetrically placed and preferably circumferentially distributed about the symmetry axis (8) of the storage compartment (3).

8. A device (1) according to claim 7, **characterized in that** it has a collecting chute (9) associated with every plurality of apertures (5).

9. A device (1) according to claim 8, **characterized in that** it has means (10) for reversibly shutting the plurality of apertures (5), operated when the respective collecting chute (9) is loaded.

10. A device (1) according to any one of the preceding claims,
**characterized in that** the storage compartment (3) is provided with a second plurality of outlet apertures (5) for dispensing respective pluralities of capsules (2) with the same or different orientation.

11. A device (1) according to any one of the preceding claims, **characterized in that** the inlet (4) for capsules (2) is at the top part (12) of the storage compartment (3).

12. A device (1) according to any one of the preceding claims, **characterized in that** it is provided with sensors (13) for signaling the reached preset minimum amount of capsules (2).

## Patentansprüche

1. Automatische Spendervorrichtung (1) für ausrichtbare Kapseln (2) zur Zubereitung heißer Getränke, umfassend
wenigstens einen Sammelbehälter (3) zur Aufnahme der Kapseln in ungeordneter Weise, wobei der Sammelbehälter (3) mit wenigstens einer Füllöffnung (4) für die Kapseln (2) und mit wenigstens einer ersten Anzahl von Öffnungen (5) versehen ist, die es den Kapseln (2) ermöglicht, den Sammelbehälter in geordneter Weise zu verlassen, **dadurch gekennzeichnet, dass** sie Mittel (6) zum Drehen des Sammelbehälters (3) um eine Rotationsachse (7) umfasst, um den geordneten Auswurf der Kapseln (2) zu ermöglichen.

2. Vorrichtung nach Anspruch 1, **dadurch gekennzeichnet, dass** die Öffnungen (5) die Formgestalt der Kapsel in Auswurfrichtung nachbilden.

3. Vorrichtung nach Anspruch 1 oder 2, **dadurch gekennzeichnet, dass** der Speicfterbehäfter (3) eine zylindrische oder prismatische Form mit einer Hauptsymmetrieachse (8) aufweist.

4. Vorrichtung nach Anspruch 3, **dadurch gekennzeichnet, dass** die Symmetriesachse (8) geneigt ist.

5. Vorrichtung nach Anspruch 3 oder 4, **dadurch gekennzeichnet, dass** die Symmetrieachse (8) und die Rotationsachse (7) übereinstimmen.

6. Vorrichtung nach Anspruch 3 oder 4, **dadurch gekennzeichnet, dass** die Symmetrieachse (8) und die Rotationsachse (7) nicht übereinstimmen.

7. Vorrichtung nach einem der Ansprüche 3 bis 6, **dadurch gekennzeichnet, dass** jede Anzahl von Öffnungen (5) um die Symmetrieachse (8) des Sammelbehälters (3) herum symmetrisch platziert und bevorzugt auf dem Gesamtumfang verteilt sind.

8. Vorrichtung nach Anspruch 7, **dadurch gekennzeichnet, dass** sie eine Sammelrinne (9) aufweist, die mit jeder Anzahl von Öffnungen (5) assoziiert ist.

9. Vorrichtung nach Anspruch 8, **dadurch gekennzeichnet, dass** sie Mittel (10) aufweist zum reversiblen Schließen der Anzahl von Öffnungen (5), welches betätigt wird, wenn die entsprechende Sammelrinne (9) befüllt ist.

10. Vorrichtung nach einem der vorhergehenden Ansprüche, **dadurch gekennzeichnet, dass** der Sammelbehälter (3) mit einer zweiten Anzahl von Entnahmeöffnungen (5) zur Ausgabe einer entsprechenden Anzahl von Kapseln mit derselben oder einer anderen Ausrichtung versehen ist.

11. Vorrichtung nach einem der vorhergehenden Ansprüche, **dadurch gekennzeichnet, dass** die Füllöffnung (4) für die Kapseln (2) auf dem Oberteil (12) des Sammelbehälters angeordnet ist.

12. Vorrichtung nach einem der vorhergehenden Ansprüche, **dadurch gekennzeichnet, dass** sie mit Sensoren (13) zum Signalisieren des erreichten voreingestellten Minimums der Anzahl von Kapseln (2) ausgestattet ist.

## Revendications

1. Dispositif de distribution automatique (1) de capsules orientables (2) pour la préparation de boissons chaudes, comprenant au moins un compartiment de stockage (3) conçu pour recevoir les capsules (2) d'une manière désordonnée, le compartiment de stockage (3) étant pourvu d'au moins une entrée (4) pour des capsules (2) et d'au moins une première pluralité d'ouvertures (5) conçues pour permettre aux capsules (2) de sortir d'une manière orientée du compartiment de stockage, **caractérisé en ce qu'**il comprend un moyen (6) pour faire tourner le compartiment de stockage (3) autour d'un axe de rotation (7) afin de faciliter la sortie des capsules d'une manière orientée (2).

2. Dispositif (1) selon la revendication 1, **caractérisé en ce que** les ouvertures (5) reproduisent la forme du volume de la capsule (2) dans la direction de la sortie.

3. Dispositif (1) selon la revendication 1 ou 2, **caractérisé en ce que** le compartiment de stockage (3) a une forme cylindrique ou prismatique avec un axe de symétrie principal (8).

4. Dispositif (1) selon la revendication 3, **caractérisé en ce que** ledit axe de symétrie (8) est incliné.

5. Dispositif (1) selon la revendication 3 ou 4, **caractérisé en ce que** l'axe de symétrie (8) et l'axe de rotation (7) coïncident.

6. Dispositif (1) selon la revendication 3 ou 4, **caractérisé en ce que** l'axe de symétrie (8) et l'axe de rotation (7) ne coïncident pas.

7. Dispositif (1) selon l'une quelconque des revendications 3 à 6, **caractérisé en ce que** chaque pluralité d'ouvertures (5) est placée d'une manière symétrique et est répartie, de préférence dans la direction circonférentielle, autour de l'axe de symétrie (8) du compartiment de stockage (3).

8. Dispositif (1) selon la revendication 7, **caractérisé en ce qu'**il comporte une goulotte collectrice (9) associée à chaque pluralité d'ouvertures (5).

9. Dispositif (1) selon la revendication 8, **caractérisé en ce qu'**il comporte un moyen (10) pour fermer d'une manière réversible la pluralité d'ouvertures (5), mis en marche lorsque la goulotte collectrice respective (9) est chargée.

10. Dispositif (1) selon l'une quelconque des revendications précédentes, **caractérisé en ce que** le compartiment de stockage (3) est pourvu d'une seconde pluralité d'ouvertures de sortie (5) pour distribuer des pluralités respectives de capsules (2) ayant la même orientation ou une orientation différente.

11. Dispositif (1) selon l'une quelconque des revendications précédentes, **caractérisé en ce que** l'entrée (4) pour les capsules (2) est dans la partie sommitale (12) du compartiment de stockage (3).

12. Dispositif (1) selon l'une quelconque des revendications précédentes, **caractérisé en ce qu'**il est pourvu de capteurs (13) pour signaler que la quantité minimale préétablie de capsules (2) est atteinte.
